**Europäisches Patentamt**

**European Patent Office**

**Office européen des brevets**

(19)

(11) Veröffentlichungsnummer: **0 275 935**
**B1**

(12) # EUROPÄISCHE PATENTSCHRIFT

(45) Veröffentlichungstag der Patentschrift:
27.12.90

(51) Int. Cl.⁵: **F16J 1/02**

(21) Anmeldenummer: **88100491.5**

(22) Anmeldetag: **15.01.88**

(54) Zylinder mit Kolben mit balliger Aussenform.

(30) Priorität: **19.01.87 DE 3701330**

(43) Veröffentlichungstag der Anmeldung:
**27.07.88 Patentblatt 88/30**

(45) Bekanntmachung des Hinweises auf die Patenterteilung:
**27.12.90 Patentblatt 90/52**

(84) Benannte Vertragsstaaten:
**DE ES FR GB IT SE**

(56) Entgegenhaltungen:
**EP-A- 0 201 116**
**DE-A- 2 541 579**
**DE-A- 3 418 454**
**DE-A- 3 437 111**

(73) Patentinhaber: **Bayerische Motoren Werke**
**Aktiengesellschaft, Patentabteilung**
**AJ-30 Postfach 40 02 40 Petuelring 130,**
**D-8000 München 40(DE)**

(72) Erfinder: **Feustel, Thomas, Valerystrasse 130,**
**D-8044 Unterschleissheim(DE)**
Erfinder: **Krausse, Wolfram, Baltenstrasse 10,**
**D-8000 München 81(DE)**

(74) Vertreter: **Bücken, Helmut, Bayerische Motoren Werke**
**Aktiengesellschaft Postfach 40 02 40 Petuelring 130 -**
**AJ-30, D-8000 München 40(DE)**

## Beschreibung

Die Erfindung bezieht sich auf einen Zylinder mit einem Kolben der im Oberbegriff des ersten Anspruchs angegebenen Art und geht aus von der gattungsbildenden DE-A 34 37 111.

Übliche Leichtmetallkolben weisen längs des Kolbenschaftes gekrümmt verlaufende Mantellinien auf, um den Temperaturverlauf längs des Kolbenschaftes und die jeweils damit verbundene Wärmedehnung auszugleichen. Diese sogenannte Schleifkurve ist am oberen Ende des Kolbenschaftes wegen der dort bei Betrieb der Brennkraftmaschine herrschenden vergleichsweise hohen Temperaturen sowie zur Erzielung guter Schmierverhältnisse durch Schmierkeilbildung meist stark eingezogen und in der Mitte leicht gekrümmt oder geradling verlaufend ausgebildet. Gemäß der Beschreibung der gattungsbildenden Schrift kann diese Schleifkurve am unteren Schaftende wegen der Schmierverhältnisse, also ebenfalls zur Erzielung einer Schmierkeilbildung, wiederum leicht eingezogen sein oder auch geradlinig auslaufen.

Neben optimalen Laufeigenschaften im Hinblick auf die Schmierung der Kolbenlaufbahn liegt ein weiterer Schwerpunkt der Kolbenentwicklung in der Reduzierung von Kolbengeräuschen, wie sie beispielsweise durch Kolbenkippbewegungen verursacht werden. Eine mögliche Maßnahme zur Geräuschreduzierung liegt in einer bereichsweisen Verlängerung des Kolbenhemdes in axialer Richtung des Kolbens durch Laschen, wie sie beispielsweise in der DE-A 26 33 427 gezeigt sind. Jene Schrift erwähnt daneben auch die Erfordernis, zur Erhöhung der Kolbenlebensdauer sowie zur Geräuschreduzierung den Kolben nicht zu kurz zu gestalten, so daß insbesondere bei Verwendung in Hubkolben-Brennkraftmaschinen das der Kurbelwelle zugewandte Kolbenende in der unteren Totpunktstellung des Kolbens teilsweise außerhalb der umgebenden Zylinderlaufbüchse zum Liegen kommt.

Die Ergebnisse, welche mit Laschen versehenen Kolben erzielt wurden, konnten hinsichtlich der Geräuschentwicklung jedoch nur zum Teil befriedigen. Oftmals trat das unerwünschte Kolbenklappern trotz vorhandener Laschen uneingeschränkt weiterhin auf.

Aufgabe der vorliegenden Erfindung ist es daher, einen hinsichtlich der Geräuschentwicklung weiter optimierten Kolben bereitzustellen.

Diese Aufgabe wird durch die kennzeichnenden Merkmale des ersten Patentanspruchs gelöst.

Läuft die eingezogene Schleifkurve in jenem Kolbenschaftbereich, welcher bei einer Totpunktstellung des Kolbens außerhalb der Zylinderbüchse liegt bei entsprechender Totpunktstellung des Kolbens kontinuierlich zum Endpunkt der Zylinderbüchse hin aus, so wird zum einen der Kolben nicht nur während seiner oszillierenden Bewegung, sondern auch in der Totpunktstellung exakt durch die Zylinderlaufbüchse geführt, da das minimal vorhandene Kolbenspiel in Bezug zur Zylinderbüchse nunmehr in deren Endbereich auftritt. Zum anderen verursacht eine dennoch auftretende leichte Kippbewegung des Kolbens in seiner Totpunktstellung deutlich geringere Geräusche, da ein mit den kennzeichnenden Merkmalen versehener Kolben nunmehr quasi auf der Endkante der Zylinderbüchse abrollt; harte geräuschverursachende Stöße, insbesondere auf den Kolbenendbereich, werden durch Abrunden jenes Bereiches vermieden.

Bislang wird dagegen, wie bereits oben erläutert, die Schleifkurve im Bereich dieses Schaftendes willkürlich gestaltet oder läuft überhaupt geradlinig aus. Letzteres verursacht die bereits erwähnten harten Stöße des Kolbenschaftes gegen die Zylinderbüchse, wohingegen eine zu weitläufig auslaufende Schleifkurve den Tragflächenanteil des Kolbenschaftes unnötig verringert und somit eine ungenügende Kolbenführung durch die Zylinderbüchse verursacht. Als besonders günstig erwies es sich dabei, den Auslaufpunkt so zu legen, daß er bei Totpunktstellung des Kolbens mit der Endkante der Zylinderbüchse zusammenfällt. Zur gleichzeitigen Optimierung der Schmierung der Kolbenlaufbahn kann es aber auch erforderlich sein, den Auslaufpunkt bei entsprechender Kolbentotpunktstellung maximal um den 0,1-fachen Kolbendurchmesser in den Endbereich der Zylinderbüchse zu legen. Auch hiermit kann ein noch ausreichender Tragflächenanteil des Kolbenschaftes erzielt werden; die Geräuschentwicklung wird dadurch nicht negativ beeinflußt.

Vorteilhaft ist es, einen im Inneren des Kolbens bei Kolbentotpunktstellung zumindest teilweise über den Endbereich der Zylinderbüchse hinausragenden umlaufenden Bund vorzusehen. Dieser Bund bewirkt eine deutliche Steifigkeitserhöhung. Bekanntlich kann sich über der Laufzeit eines Leichtmetallkolbens ein Schafteinfall einstellen, welcher den Verlauf der Schleifkurve verändern würde und wodurch somit eine Aufrechterhaltung des Merkmals des ersten Patentanspruchs über eine längere Kolbenlaufzeit nicht sichergestellt sein könnte. Ein derartiger umlaufender Bund dagegen erhöht die Steifigkeit in jenem Kolbenbereich auf einfache Weise, so daß damit auch bei längster Kolbenlaufzeit kein unzulässig hoher Schafteinfall auftreten kann.

Dabei kann bei minimaler Materialanhäufung eine maximale Versteifungswirkung erzielt werden, wenn der Bund im wesentlichen mittig zum Auslaufpunkt der Schleifkurve gelegt wird und eine Höhe von maximal dem 0,2-fachen Kolbendurchmesser aufweist.

Zwar ist aus der DE-A 25 41 579 ein Tauchkolben für Verbrennungsmotore mit im unteren Schaftbereich verdicktem Kolbenhemd bekannt; dabei dient jener Bund jedoch vorrangig zum Steifigkeitsausgleich für die auf dem Kolbenhemd umlaufenden Ringnuten. Jene Ringnuten sollen dabei die Schmierung verbessern und müssen somit auch in der Totpunktstellung des Kolbens stets innerhalb der Zylinderbüchse liegen. Da sich folglich auch jener Bund stets innerhalb des Zylinderbüchsenbereiches befinden wird, gibt jene Schrift keine Anregung, einen erfindungsgemäß mit einer entsprechenden Schleifkurve korrespondierenden Bund vorzusehen. Desweiteren dienten derartige Bunde bislang zur Aufnahme des Kolbens während dessen Fertigungsvorganges. Damit ist aber die Lage des Bundes - ebenso wie beim Vorsehen zur Erhöhung der Schaftsteifigkeit - nicht durch die Lage des Auslaufpunktes einer Kolbenschleifkurve bestimmt.

Im folgenden wird die vorliegende Erfindung anhand eines bevorzugten Ausführungsbeispieles näher beschrieben. Es zeigt:

Fig. 1 die Querschnittskizze eines erfindungsgemäßen Kolbens in seiner unteren Totpunktstellung, sowie

Fig. 2 die zugehörige Schleifkurve.

Ein Kolben 1 ist in einer Zylinderbüchse 2 in Pfeilrichtung 0 geführt und ragt mit seiner Unterkante 3 in seiner unteren Totpunktstellung wie gezeigt um einen Betrag x über die Endkante 4 der Zylinderbüchse 2 hinaus. Im Inneren des Kolbens ist ein in etwa im Abstand x von der Kolbenunterkante 3 umlaufender und zumindest teilweise über die Endkante 4 hinausragender Bund 5 vorgesehen. Dieser Bund 5 dient zur Erhöhung der Kolbensteifigkeit in jenem Bereich und stellt zugleich den Erhalt den erfindungsgemäßen Schleifkurve auch über extrem lange Kolbenlaufzeiten sicher.

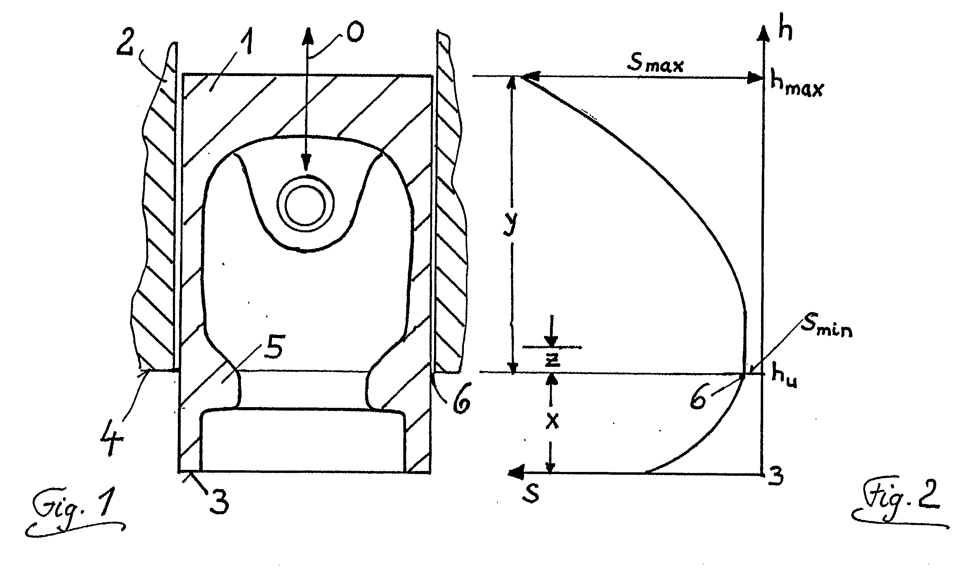

Diese erfindungsgemäße Schleifkurve ist in Fig. 2 dargestellt. Gezeigt ist dabei das Kolbenspiel s über der Kolbenschafthöhe h bezüglich der Zylinderbüchse 2, wobei die Ordinate dieses Diagrammes mit der Zylinderbüchsenwand gleichzusetzen ist. In jenem Kolbenschaftbereich y, welcher sich stets - also auch in der gezeigten Kolbentotpunktstellung - innerhalb der Zylinderbüchse 2 befindet, zeigt die Schleifkurve einen bekannten Verlauf mit maximalen Spiel $s_{max}$ für die maximale Kolbenschafthöhe $h_{max}$ wegen der dort auftretenden maximalen Wärmedehnungen. In der Nähe der Kolbenschafthöhe $h_u$, an welcher der Kolbenschaftbereich y in den bei Kolbentotpunktstellung außerhalb der Büchse liegenden Kolbenschaftbereich x übergeht, läuft die Schleifkurve geradlinig auf den minimalen Spielwert $s_{min}$ aus. Im Kolbenschaftbereich x läuft die Schleifkurve von der Kolbenunterkante 3 zur Kolbenschafthöhe $h_u$ hin auf den gleichen Wert $s_{min}$ aus. Der Auslaufpunkt 6 der Schleifkurve fällt bei diesem Ausführungsbeispiel vorteilhafterweise mit der Kolbenschafthöhe $h_u$ zusammen, bzw. liegt bei Kolbentotpunktstellung auf Höhe der Endkante 4 der Zylinderbüchse 2.

Auf diese Weise ist sowohl im Kolbenschaftbereich y als auch - gewährleistet durch den umlaufenden Bund 5 zusammen mit dem minimalen Kolbenspiel $s_{min}$ - im Bereich der Kolbenschafthöhe $h_u$ eine maximal mögliche Kolbenführung erzielbar. Ein dennoch leichtes Kolbenkippen führt wegen der in der Kolbenschafthöhe $h_u$ auslaufenden Schleifkurven quasi zu einem Abrollen des Kolbenschaftes auf der Zylinderbüchsenwand. Die durch die Kolbenkippbewegung verursachte Geräuschentwicklung wird dadurch deutlich herabgesetzt, harte Stöße der Endkante 4 gegen den Kolbenendbereich können wegen der Abrundung gemäß der Schleifkurve nicht mehr auftreten.

**Patentansprüche**

1. Zylinder mit einem Kolben mit balliger Außenform, insbesondere für Brennkraftmaschinen, welcher innerhalb der Zylinderbüchse (2) oder dgl. oszillierend zwischen zwei Totpunkten geführt ist, und wobei die teilweise gekrümmt verlaufenden Kolbenmantellinien eine Schleifkurve beschreiben, welche an den Enden des Kolbenschaftes in das Kolbenhemd eingezogen ist sowie an Auslaufpunkten (6) kontinuierlich in einen geradlinigen Verlauf übergeht, dadurch gekennzeichnet, daß der Auslaufpunkt (6) der Schleifkurve jenes Kolbenbereiches (x), welcher bei einer Totpunktstellung des Kolbens außerhalb der Zylinderbüchse (2) liegt, innerhalb eines Kolbenschaftbereiches (z) liegt, welcher bei genannter Totpunktstellung des Kolbens (1) begrenzt ist von der Endkante (4) der Zylinderbüchse (2) und höchstens um den 0,1-fachen Kolbendurchmesser in die Zylinderbüchse (2) hineinragt.

2. Zylinder mit einem Kolben nach Anspruch 1, dadurch gekennzeichnet, daß der Auslaufpunkt (6) bei genannter Totpunktstellung des Kolbens (1) auf Höhe der Endkante (4) der Zylinderbüchse (2) liegt.

3. Zylinder mit einem Kolben nach Anspruch 1 oder 2, dadurch gekennzeichnet, daß im Inneren des Kolbens (1) ein umlaufender Bund (5) vorgesehen ist, welcher bei genannter Totpunktstellung des Kolbens (1) zumindest teilweise über die Endkante (4) der Zylinderbüchse (2) hinausragt.

4. Zylinder mit einem Kolben nach Anspruch 3, dadurch gekennzeichnet, daß der umlaufende Bund (5) eine Höhe von maximal dem 0,2-fachen Kolbendurchmesser aufweist und im wesentlichen mittig zum Auslaufpunkt (6) der Schleifkurve des Kolbenbereiches (x) angeordnet ist.

**Claims**

1. A cylinder with a piston with a crowned external form, in particular for internal-combustion engines, which is guided within the cylinder liner, (2) or the like in an oscillating manner between two dead centres, and in which the piston surface lines, which run partially in a curved shape, describe a horseshoe curve which is drawn in at the ends of the piston shaft into the piston shell and also at run-out points (6) passes continuously into a straight-lined path, characterised in that the run-out point (6) of the horse-shoe curve of the piston region (x), which at a dead centre position of the piston lies outside the cylinder liner (2), lies within a piston shaft region (z) which at the said dead centre position of the piston (1) is delimited by the end edge (4) of the cylinder liner (2) and at most projects by 0.1 times the piston diameter into the cylinder liner (2).

2. A cylinder with a piston according to Claim 1, characterised in that the run-out point (6) at the said dead centre position of the piston (1) lies at the height of the end edge (4) of the cylinder liner (2).

3. A cylinder with a piston according to Claim 1 or 2, characterised in that, in the interior of the piston (1), a circumambient collar (5) is provided which, at the said dead centre position of the piston (1), projects at least partially over the end edge (4) of the cylinder liner (2).

4. A cylinder with a piston according to Claim 3, characterised in that the circumambient collar (5) has a height of a maximum of 0.2 times the piston diameter and is arranged substantially centrally to the run-out point (6) of the horse-shoe curve of the piston region (x).

## Revendications

1. Cylindre avec un piston de forme extérieure bombée, en particulier pour moteurs à combustion interne, qui est guidé à l'intérieur de la chemise de cylindre (2) ou analogue, de façon oscillante entre deux points morts, et où les génératrices du piston qui ont une allure partiellement courbée décrivent une courbe en boucle, qui est en retrait dans la chemise de piston aux extrémités du fût de piston et qui se transforme progressivement en une allure rectiligne aux points de fuite (6), caractérisé en ce que le point de fuite (6) de la courbe en boucle de la zone de piston (x) qui se trouve à l'extérieur de la chemise de cylindre (2) lors d'une position de point mort, est situé à l'intérieur d'une zone de fût de piston qui, lors de la position de point mort citée du piston (1), est délimité par l'arête d'extrémité (4) de la chemise de cylindre (2) et qui pénètre tout au plus de 0,1 fois le diamètre du piston dans la chemise de cylindre (2).

2. Cylindre avec un piston selon la revendication 1, caractérisé en ce que le point de fuite (6), lors de la position de point mort citée du piston (1), se situe au niveau de l'arête d'extrémité (4) de la chemise de cylindre (2).

3. Cylindre avec un piston selon la revendication 1, caractérisé en ce qu'à l'intérieur du piston (1) est prévue une collerette (5) circulaire, qui, lors de la position de point mort citée du piston (1), dépasse au moins partiellement au-dessus de l'arête d'extrémité (4) de la chemise de cylindre (2).

4. Cylindre avec un piston selon la revendication 1, caractérisé en ce que la collerette circulaire (5) présente une hauteur faisant au maximum 0,2 fois le diamètre du piston et est disposée sensiblement centrée par rapport au point de fuite (6) de la courbe en boucle de la zone (x) du piston.

Fig. 1

Fig. 2

EP 0 275 935 B1